(19) Europäisches Patentamt

European Patent Office

Office européen des brevets

(11) Publication number: **0 251 769 B1**

(12) **EUROPEAN PATENT SPECIFICATION**

(45) Date of publication of patent specification: **16.02.94**   (51) Int. Cl.5: **B65D 65/40**, B32B 27/08

(21) Application number: **87305794.7**

(22) Date of filing: **30.06.87**

(54) Oxygen barrier film.

(30) Priority: **30.06.86 US 880259**

(43) Date of publication of application:
**07.01.88 Bulletin 88/01**

(45) Publication of the grant of the patent:
**16.02.94 Bulletin 94/07**

(84) Designated Contracting States:
**AT BE CH DE ES FR GB GR IT LI LU NL SE**

(56) References cited:
**EP-A- 0 141 555**
**US-A- 4 514 465**

(73) Proprietor: **W.R. Grace & Co.-Conn.**
**Grace Plaza,**
**1114 Avenue of the Americas**
**New York, New York 10036-7794(US)**

(72) Inventor: **Shah, Gautam P.**
**603 Harness Trail**
**Simpsonville South Carolina 29681(US)**

(74) Representative: **Collier, Jeremy Austin Grey et al**
**J.A.Kemp & Co.**
**14, South Square**
**Gray's Inn**
**London WC1R 5EU (GB)**

Rank Xerox (UK) Business Services
(3.10/3.09/3.3.3)

**Description**

BACKGROUND OF THE INVENTION

This invention relates to oriented thermoplastic films for packaging: and more particularly, this invention relates to a coextruded, multilayer, oriented film having high oxygen barrier characteristics.

Thermoplastic film, and in particular polyolefin materials, have been used for some time in connection with packaging of various articles including food products which require protection from the environment, an attractive appearance, and resistance to abuse during the storage and distribution cycle. Suitable optical properties are also desirable in order to provide for inspection of the packaged product after packaging, in the distribution chain, and ultimately at point of sale. Optical properties such as high gloss, high clarity, and low haze characteristics contribute to an aesthetically attractive packaging material and packaged product to enhance the consumer appeal of the product. Various polymeric materials have been used to provide lower gas permeability in order to reduce the transmission of oxygen through the packaging film and thereby retard the spoilage and extend the shelf life of products such as food items which are sensitive to oxygen.

It is also desirable to include in a packaging film a shrink feature, i.e., the propensity of the film upon exposure to heat to shrink or, if restrained, create shrink tension within the packaging film. This property is imparted to the film by orientation of the film during its manufacture. Typically, the manufactured film is stretched in either a longitudinal (machine) direction, a transverse direction, or both, in varying degrees to impart a certain degree of shrinkability in the film upon subsequent heating. After being so stretched, the film is rapidly cooled to provide this latent shrinkability to the resulting film. One advantage of shrinkable film is the tight, smooth appearance of the wrapped product that results, providing an aesthetic package as well as protecting the packaged product from environmental abuse. Various food and non-food items may be and have been packaged in shrinkable films.

It is sometimes also desirable to orient the packaging film and thereafter heat set the film by bringing the film to a temperature near its orientation temperature. This produces a film with substantially less shrinkability, while retaining much of the advantages of orientation, including improved modulus and optical properties.

Of interest is U. S. Patent No. 4,424,243 issued to Nishimoto et al disclosing a heat shrinkable laminate film having outer surface layers of an ethylene/alpha-olefin copolymer or a mixture of the ethylene/alpha-olefin copolymer with an alpha-olefin polymer. Ethylene alkyl acrylates having 1 to 6 carbon atoms may comprise such alpha-olefin polymers.

Also of interest is U.S. Patent No. 4,464,443 issued to Farrell et al showing the use of EVOH in a multilayer polymer structure, and including drying agents or desiccants such as sodium phosphate-di-basic and calcium chloride. EVOH, although a good barrier material, is moisture sensitive, and loses a great deal of its barrier properties at higher levels of relative humidity.

Also of interest is U.S. Patent No. 4,457,960 issued to Newsome which discloses the use of EVOH and EVOH blends in a multiple layer film. The film may be made as shrinkable film, and may be melt extruded. The outside layer of the multiple layer film may be a blend of linear low density polyethylene (LLDPE) and EVA.

Also of interest is U.S. Patent No. 4,495,249 issued to Ohya et al and disclosing a multilayer laminate film with a core layer of a saponified copolymer of ethylene and vinyl acetate, and including two outer layers of a mixture of EVA and LLDPE. The multilayer laminate film of this reference can be made heat shrinkable and has gas barrier properties.

U.S. Patent No. 4,501,797 issued to Super et al discloses an unbalanced oriented multiple layer film including an intermediate layer of anhydride modified polypropylene and a barrier layer of a blend of ethylene vinyl alcohol and nylon.

U.S. Patent No. 4,501,798 issued to Koschak et al also discloses the use of a blend of EVOH and nylon and an unbalanced multiple layer polymeric film also including LLDPE or EVA in a sealant layer. Adhesive layers of materials having carboxy moieties and preferably anhydride derivatives are present. The film of the reference is characterized by having high barrier to gaseous transmission, high gloss, transparency and stiffness.

U.S. Patent No. 4,347,332 issued to Odorzynski et al discloses a film having a blend of nylon and ethylene vinyl alcohol copolymer.

It is an object of the present invention to provide a coextruded thermoplastic multilayer film characterized by good oxygen barrier properties over a wide range of moisture conditions.

It is also an object of the present invention to provide a coextruded thermoplastic multilayer film which is substantially free of voids in the barrier material of the film.

It is a further object of the present invention to provide a thermoplastic multilayer film having an aesthetic appearance with good clarity, and other desirable optical properties.

It is another object of the present invention to provide a thin thermoplastic multilayer film having superior toughness and abrasion resistance.

It is still another object of the present invention to provide a coextruded thermoplastic multilayer film which may be totally coextruded, and oriented to provide a film with good shrink properties and good barrier properties over a wide range of moisture conditions.

It is yet another object of the present invention to provide a coextruded thermoplastic film which is oriented yet substantially shrink free.

The present invention relates to an oriented multilayer film comprising a cross-linked core layer comprising an ethylene vinyl alcohol copolymer; two cross-linked interior layers each comprising an adhesive polymeric material; and two cross-linked outer layers each comprising polymeric material selected from the group consisting of ethylene butyl acrylate copolymer, and blends comprising at least 10% of said ethylene butyl acrylate copolymer blended with ethylene alpha-olefin copolymer.

In another aspect of the invention, a method of making an oriented multilayer film comprises the steps of simultaneously coextruding a core layer comprising an ethylene vinyl alcohol copolymer, two intermediate layers each comprising an adhesive polymeric material, and two cross-linked outer layers each comprising polymeric material selected from the group consisting of ethylene butyl acrylate copolymer, and blends comprising at least 10% of said ethylene butyl acrylate copolymer blended with ethylene alpha-olefin copolymer; rapidly cooling the coextruded film; collapsing the cooled film; heating the collapsed film; and stretching and orienting the heated film, and wherein the film is irradiated to effect cross-linking prior to orientation.

Generally before heating the collapsed film, the film is cross-linked by irradiating the film with between $3 \times 10^4$ and $13 \times 10^4$ Gray (3 and 13 megarads) of irradiation. The collapsed film is generally heated to a temperature between 105° and 120°C. The method of the invention may also comprise the step of reheating the oriented film to a temperature near its orientation temperature to provide a substantially non-shrinkable film.

The term "ethylene butyl acrylate copolymer" (EBA) is used herein to define a copolymer formed from ethylene and butyl acrylate monomers wherein the ethylene derived units in the copolymer are present in major amounts.

"Intermediate layer", "interior layer", and the like is used herein to define a layer in a multilayer film enclosed on both sides by other layers.

The term "oriented" and the like is used herein to define a polymeric material in which the molecules have been aligned by a process such as racking or blown bubble process.

The term "ethylene vinyl alcohol copolymer", "EVOH", and the like is used herein to include saponified or hydrolyzed ethylene vinyl acetate copolymers.

The term "racking" is used herein to define a well-known process for stretching coextruded and reheated multilayer film by means of tenter framing or blown bubble processes.

The term "ethylene alpha-olefin copolymer" is used herein to include linear copolymers of ethylene and alpha-olefins as for example those defined below.

The term "linear low density polyethylene", "LLDPE", and the like are used herein to refer to copolymers of ethylene with one or more comonomers selected from $C_4$ to $C_{10}$ alpha olefins such as butene-1, octene, etc. in which the molecules of the copolymers comprise long chains with few side chain branches or cross-linked structures. This molecular structure is to be contrasted with conventional low or medium density polyethylenes which are more highly branched than their respective counterparts.

"LLDPE" as defined herein has a density usually in the range of from 0.916 grams per cubic centimeter to 0.925 grams per cubic centimeter.

The terms "linear medium density polyethylene", "LMDPE" and the like as used herein refers to copolymers as described above and having a density usually in a range of from 0.926 grams per cubic centimeter to 0.941 grams per cubic centimeter.

The term "oriented" is used herein to define a material which, when heated to an appropriate temperature above room temperature (for example 96°C), will have free shrink of 5% or greater in at least one linear direction.

The term "polyamide" refers to high molecular weight polymers having amide linkages along the molecular chain, and refers more specifically to synthetic polyamide such as various nylons.

All compositional percentages used herein are calculated on a "by weight" basis.

BRIEF DESCRIPTIONS OF THE DRAWINGS

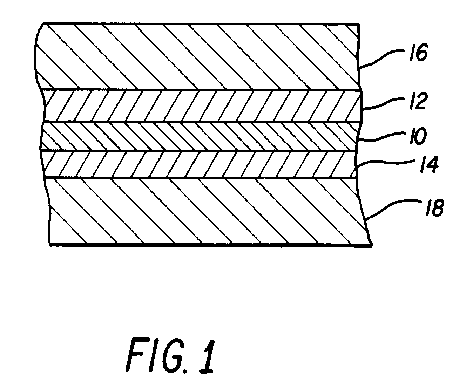

Further details are given below with reference to the sole drawing figure where figure 1 is a schematic cross-section of a preferred embodiment of a multilayer film of the invention.

DESCRIPTIONS OF THE PREFERRED EMBODIMENTS

Referring specifically to the drawings, in figure 1, a schematic cross-section of the preferred embodiment of the coextruded multilayer oriented film of the invention is shown. Film structure is directed to a multilayer film having the generalized structure of A/B/C/B/A where A is an outer layer, B is an intermediate adhesive layer, and C is a core layer containing a barrier material. Preferably, the outer layers A each comprise 35% of the total multilayer film thickness; the intermediate layers B each comprise 10% of the film thickness; and the barrier layer C 10% of the total film thickness. The total thickness of the multilayer film is preferably between 0.5 and 2.0 mils (12.7 and 50.8 $\mu$m), and more preferably between .75 and 1.5 mils (19.05 and 38.1 $\mu$m). Even more preferably, the multi layer film of the present invention is 1 mil (25 $\mu$m) thick.

Preferably, core layer 10 is an ethylene vinyl alcohol copolymer. Core layer 10 is preferably between .05 and 1 mil (1.27 and 25 $\mu$m) thick and more preferably 0.1 mil (2.5 $\mu$m) thick. Thicknesses less than .05 mils result in a very thin film with possible voids in the barrier material. Thicknesses greater than 1 mil make the film difficult to stretch or rack, and also result in increased cost due to the expensive barrier component. A suitable EVOH is EVAL H commercially available from EVALCA.

Orienting EVOH to produce a heat shrinkable film has proven to be difficult. During the stretching or racking step for orienting such a film, the EVOH can sometimes develop voids. This phenomenon can result in some loss of oxygen barrier properties, which can affect, i.e. reduce the effective shelf life of food products packaged in EVOH film. The presence of voids in the EVOH layer can also result in discoloration of a food product, such as processed meat, and therefore reduce the appearance and market value of a packaged food item.

It is therefore desirable in certain applications to blend the EVOH of the core layer with between 1 and 20 percent of a polyamide resin. The polyamide may be a polymer or copolymer comprising polyamide comonomers. When such a blend is used, the EVOH preferably comprises between 80% and 99% by weight of the blend, and the polyamide comprises between 1% and 20% by weight of the blend. More preferably, the blend comprises 90% by weight of an ethylene vinyl alcohol copolymer, and 10% of a polyamide.

Intermediate layers 12 and 14 are preferably acid or acid anhydride-modified polymeric material which can bond the core layer 10 to the outer layers 16 and 18. This material preferably includes a graft copolymer of a polyolefin, such as polyethylene, or ethylene-ester copolymer substrate and an unsaturated carboxylic acid or acid anhydride, blended with a polyolefin, such as polyethylene, or ethylene-ester copolymer.

Outer layers 16 and 18 comprise a polymeric material which can be EBA, or a blend of EBA with ethylene alpha-olefin copolymers such as LLDPE and LMDPE. Preferred compositions of outer layers 16 and 18 are given below in table 1.

TABLE 1

|  | EBA (% By Weight) | LLDPE (% By Weight) | LMDPE (% By Weight) |
|---|---|---|---|
| Composition 1 | 100 | - | - |
| Composition 2 | 50 | 25 | 25 |
| Composition 3 | 25 | 50 | 25 |
| Composition 4 | 10 | 50 | 40 |

It is preferred that EBA comprise at least 10% of each of outer layers 16 and 18. In the blended compositions, the linear polymeric materials listed above may be used together or in the alternative, producing two and three component blends when combined with the EBA.

More preferably, outer layers 16 and 18 each comprise a three component blend of LLDPE, LMDPE, and EBA. These outer layers preferably include from 40% to 60% by weight of LLDPE, from 20% to 30% by weight of LMDPE, and from 20% to 30% by weight of EBA. Even more preferably, the outer layers 16 and 18 include 50%, by weight, of a LLDPE, 25%, by weight, of LMDPE, and 25%, by weight, of EBA.

The EBA has a butyl acrylate (BA) content of preferably between 0.5 and 19% by weight and more preferably 2.5% by weight.

Orientation is done by racking or stretching the film at a racking ratio of from between 3.0 and 5.0 times the original dimensions of the film in the longitudinal (machine) and transverse directions.

In the following Examples "Escorene", "Dowlex", "Grillon" and "Plexar" are Trade Marks.

## EXAMPLE 1

A sample film was prepared by blending 50% of LLDPE (Escorene LL 3001.63), 25% LMDPE (Dowlex 2037) and 25% EBA having a butyl acrylate content of about 2.5%. About 1.5% (by weight of the blend) slip and anti-block agents were added to the blend. This outside blend layer was co-extruded with a core layer containing a blend of 90% EVOH (EVAL H) and 10% of a nylon 6/nylon 12 copolymer (Grillon CA-6), and an intermediate adhesive (Norchem Plexar 169).

The Escorene LL 3001.63 can be obtained from Exxon. This is an especially preferred LLDPE for use in this invention, and is a copolymer of ethylene and 1-hexene and has a density at 23°C of about 0.920 grams per cubic centimeter and a melt flow index of from about 0.7 to about 1.2 grams per ten minutes (as measured by ASTM-D-1238, E-28). LLDPE adds toughness to the film.

A preferred LMDPE is Dowlex 2037, also obtainable from Dow Chemical Company. This resin is a copolymer of ethylene and octene and has a density at 23°C of about 0.935 grams per cubic centimeter and a melt flow index of about 2.55 grams per ten minutes (ASTM-D-1238, E-28). The LMDPE imparts stiffness, i.e. high modulus, to the film without significantly sacrificing toughness. The high modulus characteristic of the film is especially desirable in form-fill-seal applications where the film is fed as a lay-flat film and then formed on a forming shoe into a tube.

The EBA of the outside blend layer was Norchem DNBA 714. This material has a density at 23°C of about 0.921 grams per cubic centimeter (ASTM D 1505) and a melt index (ASTM-D-1238) of about 3.2 grams per ten (10) minutes. The butyl acrylate content of this EBA is about 2.5% by weight. The crystalline melting point is about 109°C as determined by differential scanning calorimeter.

The EVOH of the core blend layer was EVAL H, available from EVAL Company of America and having an ethylene content of about 38% by weight and a melt index of about 1.5 grams/10 minutes. Other suitable EVOH resins include EVAL E, EVAL F, and EVAL K, as well as blends of the above, and preferably such resins or blends having a melt index of between about 1 to 4 grams per ten minutes (ASTM 1238). Grillon CA-6, available from Emser Industries, was blended with the EVOH. The Grillon CA-6 is a nylon copolymer having about 60% nylon 6 and about 40% nylon 12 by weight.

Although nylon 12 would be effective alone as a blending material in the core layer, this is a relatively expensive material. Nylon 6 alone would be effective as a blending material, but with some difficulty in processing. The particular blend employed proved to be very advantageous in providing an economical yet effective means for providing a core blend having the good barrier properties associated with EVOH, but with the processing and elongation advantages of nylon. Another suitable nylon copolymer is Grillon CR-9, having 20-30% nylon 6 and 70-80% nylon 12 by weight.

The intermediate adhesive material, Norchem Plexar 169, is a low density polyethylene-based anhydride-modified resin produced by Norchem. Other anhydride-modified adhesives such as CXA-E162 (dupont) can also be used as the intermediate adhesive.

The polymer melt from the coextrusion die was then cooled and cast into a solid tape which was irradiated with 3 x 104 Gray (3 megarads) of irradiation. The tape was then heated to about 114°C in an oven and blown into a bubble. The bubble was expanded to about 3.5 times its original dimensions in both the machine (longitudinal) and transverse directions, and then deflated and ply separated into single wound film rolls. The final film had a thickness of about one mil (25 $\mu$m), and in addition to the shrink properties imparted by orientation, exhibited excellent toughness, good optics, burn out resistance, resistance to tear propagation, and heat sealability. The film also exhibited good abuse resistance and the necessary stiffness and lower tack required for packaging applications and was substantially free of voids in the EVOH/polyamide blend layer.

Test results for the sample film are listed below in Table 2.

## TABLE 2

| Tensile at Break and 73°F (23°C) [1] (PSI) | | (MPa) |
|---|---|---|
| Avg.[2] Longitudinal | 109.5x100 | 75.5 |
| Std. Dev.[3] | 4.5x100 | 3.1 |
| 95% C.L. | 7.2x100 | 5.0 |
| Avg. Transverse | 87.2x100 | 60.1 |
| Std. Dev. | 1.2x100 | 0.8 |
| 95% C.L. | 1.9x100 | 1.3 |

| Elongation at Break and 73°C) (23°C) [4] (%) | |
|---|---|
| Avg. Longitudinal | 71. |
| Std. Dev. | 4. |
| 95% C.L. | 6. |
| Avg. Transverse | 83. |
| Std. Dev. | 2. |
| 95% C.L. | 3. |

| Modulus at 73°F (23°C) [5] (PSI) | | (MPa) |
|---|---|---|
| Avg. Longitudinal | 106.8x1000 | 736.4 |
| Std. Dev. | 7.7x1000 | 53.1 |
| 95% C.L. | 12.3x1000 | 84.8 |
| Avg. Transverse | 97.5x1000 | 672.3 |
| Std. Dev. | 3.2x1000 | 22.1 |
| 95% C.L. | 5.1x1000 | 35.2 |

| Tear Propagation at 73°F (23°C) [6] (grams) | |
|---|---|
| Avg. Longitudinal | 12.75 |
| Std. Dev. | 0.50 |
| 95% C.L. | 0.80 |
| Avg. Transverse | 18.00 |
| Std. Dev. | 2.48 |
| 95% C.L. | 3.95 |

| Free Shrink (%) at 220°F (104°C) [7] | |
|---|---|
| Avg. Longitudinal | 26. |
| Std. Dev. | 1. |
| 95% C.L. | 1. |
| Avg. Transverse | 28. |
| Std. Dev. | 1. |
| 95% C.L. | 1. |

6

Free Shrink
at 240°F (116°C)

| | | |
|---|---|---|
| Avg. Longitudinal | 62. | |
| Std. Dev. | 1. | |
| 95% C.L. | 2. | |
| Avg. Transverse | 58. | |
| Std. Dev. | 1. | |
| 95% C.L. | 2. | |

Free Shrink
at 260°F (127°C)

| | | |
|---|---|---|
| Avg. Longitudinal | 69. | |
| Std. Dev. | 1. | |
| 95% C.L. | 2. | |
| Avg. Long. | 63. | |
| Std. Dev. | 0. | |
| 95% C.L. | 0. | |

Shrink Properties
at 220°F (104°C)
Shrink Force (lbs)[8]

| | | N |
|---|---|---|
| Avg. Longitudinal | 0.353 | 1.570 |
| Std. Dev. | 0.009 | 0.040 |
| 95% C.L. | 0.015 | 0.067 |
| Avg. Transverse | 0.489 | 2.175 |
| Std. Dev. | 0.021 | 0.093 |
| 95% C.L. | 0.033 | 0.147 |

Shrink Tension (PSI) [9]

| | | MPa |
|---|---|---|
| Avg. Longitudinal | 332.66 | 2.29 |
| Std. Dev. | 11.88 | 0.82 |
| 95% C.L. | 18.90 | 1.30 |
| Avg. Transverse | 436.32 | 3.01 |
| Std. Dev. | 27.32 | 0.19 |
| 95% C.L. | 43.47 | 0.30 |

Shrink Properties
at 240°F (116°C)
Shrink Force (lbs.)

| | | N |
|---|---|---|
| Avg. Longitudinal | 0.395 | 1.757 |
| Std. Dev. | 0.026 | 0.116 |
| 95% C.L. | 0.041 | 0.182 |
| Avg. Transverse | 0.453 | 2.015 |
| Std. Dev. | 0.020 | 0.089 |
| 95% C.L. | 0.032 | 0.142 |

### Shrink Tension (PSI) — MPa

| | | PSI | MPa |
|---|---|---|---|
| Avg. | Longitudinal | 373.34 | 2.57 |
| | Std. Dev. | 23.56 | 0.16 |
| | 95% C.L. | 37.49 | 0.26 |
| Avg. | Transverse | 393.86 | 2.72 |
| | Std. Dev. | 21.24 | 0.15 |
| | 95% C.L. | 33.79 | 0.23 |

### Shrink Properties at 260°F (127°C)
### Shrink Force (lbs) — N

| | | lbs | N |
|---|---|---|---|
| Avg. | Longitudinal | 0.385 | 1.713 |
| | Std. Dev. | 0.035 | 0.156 |
| | 95% C.L. | 0.055 | 0.245 |
| Avg. | Transverse | 0.481 | 2.140 |
| | Std. Dev. | 0.008 | 0.356 |
| | 95% C.L. | 0.012 | 0.053 |

### Shrink Tension (PSI) — MPa

| | | PSI | MPa |
|---|---|---|---|
| Avg. | Longitudinal | 363.01 | 2.50 |
| | Std. Dev. | 31.58 | 0.22 |
| | 95% C.L. | 50.24 | 0.35 |
| Avg. | Transverse | 450.48 | 3.11 |
| | Std. Dev. | 12.63 | 0.87 |
| | 95% C.L. | 20.08 | 0.14 |

### Optical Properties at 73°F (23°C)[10]
### Haze (%)

| | |
|---|---|
| Avg. | 4.1 |
| Std. Dev. | 0.5 |
| 95% C.L. | 0.9 |

### Clarity (%) [11]

| | |
|---|---|
| Avg. | 45.5 |
| Std. Dev. | 9.2 |
| 95% C.L. | 14.7 |

### Gloss (45°) [12]

| | |
|---|---|
| Avg. | 85. |
| Std. Dev. | 2. |
| 95% C.L. | 3. |

### Oxygen Transmission[13] at 73°F (23°C) 0% RH

| | |
|---|---|
| Sample 1 | 3.7 |
| Sample 2 | 1.8 |
| Sample 3 | 2.2 |

The following footnotes apply to Table 2.
1. ASTM D882-81.
2. All values in Table 2 are averages obtained from four (4) replicate measurements.
3. C.L. is Confidence Limit - e.g., if the reported average value was 10 and the 95% C.L. was 2, then if one hundred replicate readings were made, 95 of them would have a value between 8 and 12, inclusive.
4. ASTM D-882-81.

5. ASTM D-882-81.

6. ASTM D-1938-79.

7. ASTM D-2732-70 (reapproved 1976).

8. ASTM D-2838-81 (shrink free = shrink tension x film thickness in mils x 1000)

9. ASTM D-2838-81

10. ASTM D-1003-61 (reapproved 1977)

11. ASTM D-1746-70

12. ASTM D-2457-70 (reapproved 1977)

## Claims

1. An oriented multilayer film comprising

    (a) a cross-linked core layer comprising an ethylene vinyl alcohol copolymer;

    (b) two cross-linked interior layers each comprising an adhesive polymeric material; and

    (c) two cross-linked outer layers each comprising polymeric material selected from the group consisting of ethylene butyl acrylate copolymer, and blends comprising at least 10% of said ethylene butyl acrylate copolymer blended with ethylene alpha-olefin copolymer.

2. The film of claim 1 wherein said ethylene butyl acrylate copolymer comprises from 0.5%, by weight, to 19%, by weight, of butyl acrylate derived units.

3. The film of claim 2 wherein said ethylene butyl acrylate copolymer comprises 2.5%, by weight, of butyl acrylate derived units.

4. The film of claim 1, 2 or 3 which has been cross-linked with $3x10^4$ to $13x10^4$ Gray (three megarads to thirteen megarads) of irradiation.

5. The film of claim 4 which has been cross-linked with three megarads of irradiation.

6. The film of any one of claims 1 to 5 which has been oriented by racking at a racking ratio of from 3.0 to 5.0 in both the longitudinal and transverse directions.

7. The film of claim 6 which has been oriented by racking at a racking ratio of 3.5 in both the longitudinal and transverse directions.

8. The film of any one of claims 1 to 7 wherein the two cross-linked outer layers each comprise between 10% and 100% of an ethylene butyl acrylate copolymer, blended with between 0% and 90% linear low density polyethylene.

9. The film of any one of claims 1 to 7 wherein the two cross-linked outer layers each comprise between 10% and 100% ethylene butyl acrylate copolymer blended with between 0% and 90% linear medium density polyethylene.

10. A method of making an oriented multilayer film comprising

    (a) coextruding a core layer comprising an ethylene vinyl alcohol copolymer, two intermediate layers of an adhesive material, and two outer layers each comprising polymeric material selected from the group consisting of ethylene butyl acrylate copolymer, and blends comprising at least 10% of said ethylene butyl acrylate copolymer blended with ethylene alpha-olefin copolymer;

    (b) rapidly cooling the coextruded film;

    (c) collapsing the cooled film;

    (d) heating the collapsed film; and

    (e) stretching and orienting the heated film; and wherein the film is irradiated to effect cross-linking prior to orientation.

11. The method according to claim 10 wherein, before heating the collapsed film, the film is cross-linked by irradiating the film with between $3x10^4$ and $13x10^4$ Gray (3 and 13 megarads) of irradiation.

**12.** The method of claim 10 or 11 wherein the collapsed film is heated to a temperature between 105°C and 120°C.

**13.** The method of any one of claims 10 to 12 wherein the coextruded film is cooled to room temperature.

**14.** The method according to any one of claims 10 to 13 wherein the heated film is oriented by racking at a racking ratio of from 3.0 to 5.0 in both the longitudinal and transverse directions.

**15.** The method according to claim 14 wherein the heated film is oriented by racking at a racking ratio of 3.5 in both the longitudinal and transverse directions.

**16.** The method according to any one of claims 10 to 15 further comprising the step of reheating the oriented film to a temperature near its orientation temperature to provide a substantially non-shrinkable film.

**Patentansprüche**

**1.** Orientierte Mehrschichtfolie, die
(a) eine vernetzte Kernschicht, die ein Ethylen/Vinylalkohol-Copolymer umfaßt,
(b) zwei vernetzte Innenschichten, die jeweils ein klebendes polymeres Material umfassen, und
(c) zwei vernetzte Außenschichten umfaßt, die jeweils polymeres Material ausgewählt aus der Gruppe bestehend aus Ethylen/Butylacrylat-Copolymer und Mischungen, die mindestens 10 % dem Ethylen/Butylacrylat-Copolymers gemischt mit Ethylen/$\alpha$-Olefin-Copolymer umfassen, umfassen.

**2.** Folie nach Anspruch 1, bei der das Ethylen/Butylacrylat-Copolymer 0,5 Gew.-% bis 19 Gew.% von Butylacrylat abgeleitete Einheiten umfaßt.

**3.** Folie nach Anspruch 2, bei der das Ethylen/Butylacrylat-Copolymer 2,5 Gew.-% von Butylacrylat abgeleitete Einheiten umfaßt.

**4.** Folie nach Anspruch 1, 2 oder 3, die mit $3x10^4$ bis $13x10^4$ Gray (3 Megarad bis 13 Megarad) an Strahlung vernetzt worden ist.

**5.** Folie nach Anspruch 4, die mit 3 Megarad an Strahlung vernetzt worden ist.

**6.** Folie nach einem der Ansprüche 1 bis 5, die durch Recken bei einem Reckverhältnis von 3,0 bis 5,0 sowohl in die Längsals auch die Querrichtung orientiert worden ist.

**7.** Folie nach Anspruch 6, die durch Recken bei einem Reckverhältnis von 3,5 sowohl in die Längs- als auch die Querrichtung orientiert worden ist.

**8.** Folie nach einem der Ansprüche 1 bis 7, bei der die beiden vernetzten Außenschichten jeweils zwischen 10 und 100 % Ethylen/Butylacrylat-Copolymer umfassen, das mit 0 % bis 90 % linearem Polyethylen niederer Dichte gemischt ist.

**9.** Folie nach einem der Ansprüche 1 bis 7, bei der die beider vernetzten Außenschichten jeweils zwischen 10 % und 100 % Ethylen/Butylacrylat-Copolymer umfassen, des mit 0 % bis 90 % linearem Polyethylen mittlerer Dichte gemischt ist.

**10.** Verfahren zur Herstellung einer orientierten Mehrschichtfolie, bei dem
(a) eine Kernschicht, die Ethylen/Vinylalkohol-Copolymer umfaßt, zwei Zwischenschichten aus klebrigen Material und zwei Außenschichten, die jeweils polymeres Material ausgewählt aus der Gruppe bestehend aus Ethylen/Butylacrylat-Copolymer und Mischungen umfassen, die mindestens 10 % des Ethylen-Butylacrylat-Copolymers gemischt mit Ethylen/$\alpha$-Olefin-Copolymer umfassen, koextrudiert werden,
(b) die koextrudierte Folie schnell abgekühlt wird,
(c) die abgekühlte Folie zum Zusammenfallen gebracht wird,
(d) die zusammengefallene Folie erhitzt wild und

10

(e) die erhitzte Folie gestreckt und orientiert wird, wobei die Folie bestrahlt wird, um vor der Orientierung Vernetzung zu bewirken.

**11.** Verfahren nach Anspruch 10, bei dem die Folie durch Bestrahlung der Folie mit $3x10^4$ bis $13x10^4$ Gray (3 bis 13 Megarad) an Strahlung vernetzt wird, bevor die zusammengefallene Folie erhitzt wird.

**12.** Verfahren nach Anspruch 10 oder 11, bei dem die zusammengefallene Folie auf eine Temperatur zwischen 105°C und 120°C erhitzt wird.

**13.** Verfahren nach einem der Ansprüche 10 bis 12, bei dem die koextrudierte Folie auf Raumtemperatur abgekühlt wird.

**14.** Verfahren nach einem der Ansprüche 10 bis 13, bei dem die erhitzte Folie durch Recken bei einem Reckverhältnis von 3,0 bis 5,0 sowohl in die Längs- als auch die Querrichtung orientiert wird.

**15.** Verfahren nach Anspruch 14, bei dem die erhitzte Folie durch Recken bei einem Reckverhältnis von 3,5 sowohl in die Längsals auch die Querrichtung orientiert wird.

**16.** Verfahren nach einem der Ansprüche 10 bis 15, bei dem die orientierte Folie ferner erneut bis zu einer Temperatur nahe ihrer Orientierungstemperatur erhitzt wird, um eine im wesentlichen nicht-schrumpfbare Folie zu erhalten.

**Revendications**

**1.** Film multicouche orienté comprenant :
(a) une couche centrale réticulée comprenant un copolymère d'éthylène-alcool vinylique ;
(b) deux couches intérieures réticulées comprenant chacune un matériau polymérique adhésif ; et
(c) deux couches externes réticulées dont chacune comprend un matériau polymérique choisi dans le groupe consistant en un copolymère d'éthylène-acrylate de butyle et des mélanges comprenant au moins 10% dudit copolymère d'éthylène-acrylate de butyle en mélange avec un copolymère d'éthylène-alpha-oléfine.

**2.** Film de la revendication 1, où ledit copolymère d'éthylène-acrylate de butyle comprend de 0,5% en poids à 19% en poids d'unités dérivées d'acrylate de butyle.

**3.** Film de la revendication 2, ou ledit copolymère d'éthylène-acrylate de butyle comprend 2,5% en poids d'unités dérivées d'acrylate de butyle.

**4.** Film de la revendication 1, 2 ou 3, qui a été réticulé avec $3x10^4$ à $13x10^4$ Gray (trois mégarads à treize mégarads) d'irradiation.

**5.** Film de la revendication 4, qui a été réticulé avec trois mégarads d'irradiation.

**6.** Film selon l'une quelconque des revendications 1 à 5, qui a été orienté par étirage à un rapport d'étirage de 3,0 à 5,0 en directions longitudinale et transversale.

**7.** Film de la revendication 6 qui a été orienté par étirage à un rapport d'étirage de 3,5 en directions longitudinale et transversale.

**8.** Film selon l'une quelconque des revendications 1 à 7, où les deux couches externes réticulées comprennent chacune entre 10% et 100% d'un copolymère d'éthylène-acrylate de butyle mélangé avec 0% à 90% de polyéthylène linéaire de faible densité.

**9.** Film selon l'une quelconque des revendications 1 à 7, où les deux couches externes réticulées comprennent chacune entre 10% et 100% d'un copolymère d'éthylène-acrylate de butyle mélangé avec 0 à 90% de polyéthylène linéaire de densité moyenne.

**10.** Méthode de production d'un film multicouche orienté comprenant :

EP 0 251 769 B1

(a) la coextrusion d'une couche centrale comprenant un copolymère d'éthylène-alcool vinylique, deux couches intermédiaires d'une matière adhésive et deux coucher externes chacune comprenant une matière polymérique choisie dans le groupe consistant en copolymère d'éthylène-acrylate de butyle et des mélanges comprenant au moins 10% dudit copolymère d'éthylène-acrylate de butyle en mélange avec un copolymère d'éthylène-alpha-oléfine;
(b) le refroidissement rapide du film coextrudé;
(c) l'affaissement du film refroidi;
(d) le chauffage du film affaissé ; et
(e) l'étirage et l'orientation du film chauffe ; et où le film est irradié pour effectuer la réticulation avant l'orientation.

11. Méthode selon la revendication 10, où, avant de chauffer le film affaissé, le film est réticulé par irradiation du film avec $3 \times 10^4$ à $13 \times 10^4$ Gray (trois à treize mégarads) d'irradiation.

12. Méthode selon la revendication 10 ou 11, où le film affaissé est chauffé à une température comprise entre 105 °C et 120 °C.

13. Méthode selon l'une des revendications 10 à 12, où le film coextrudé est refroidi à température ambiante.

14. Méthode selon l'une quelconque des revendications 10 à 13, où le film chauffé est orienté par étirage à un rapport d'étirage de 3,0 à 5,0 dans les deux directions longitudinale et transversale.

15. Méthode selon la revendication 14, où le film chauffé est orienté par étirage à un rapport d'étirage de 3,5 dans les deux directions longitudinale et transversale.

16. Méthode selon l'une quelconque des revendications 10 à 15, comprenant de plus l'étape de réchauffer le film orienté à une température proche de sa température d'orientation pour donner un film ne rétrécissant sensiblement pas.

12

FIG. 1